# NOUVEAU FASCICULE DE BREVET EUROPEEN

(11) **EP 1 413 088 B2**
(45) Date de publication et mention de la décision concernant l'opposition: **23.03.2016**
(45) Mention de la délivrance du brevet: 02.02.2011
(21) Numéro de dépôt: 02751506.3
(22) Date de dépôt: 22.07.2002
(51) Int. Cl.: H04L 12/24, H04L 12/46, H04L 29/06

(54) **METHODE POUR CREER UN RESEAU VIRTUEL PRIVE UTILISANT UN RESEAU PUBLIC**
VERFAHREN ZUR BILDUNG EINES VIRTUELLEN PRIVATEN NETZES UNTER VERWENDUNG EINES ÖFFENTLICHEN NETZES
METHOD OF CREATING A VIRTUAL PRIVATE NETWORK USING A PUBLIC NETWORK

(30) Priorité: 30.07.2001 CH 142401
(43) Date de publication de la demande: 28.04.2004
(73) Titulaire: Nagravision S.A., 1033 Cheseaux-sur-Lausanne (CH)
(72) Inventeur: COLLET, Daniel, CH-1012 Lausanne (CH)
(74) Mandataire: Wenger, Joel-Théophile
(86) Numéro de dépôt international: PCT/IB2002/003052
(87) Numéro de publication internationale: WO 2003/013063

(56) Documents cités:
- EP-A2- 1 071 252
- WO-A1-00/62540
- WO-A1-99/37069
- WO-A2-01/37068
- WO-A2-01/43393
- US-A- 4 323 921
- US-A- 4 484 027
- US-A- 5 588 060
- US-A- 5 764 918
- US-A- 5 937 067
- US-A- 6 073 125
- US-A- 6 092 191
- US-A- 6 147 995
- US-B1- 6 240 514
- US-B1- 6 253 326

## Description

La présente demande concerne le domaine des réseaux informatiques, en particulier la création d'un réseau privé à l'intérieur d'un réseau public.

Ces réseaux sont connus sous l'appellation anglophone "Virtual Private Network" (VPN).

Il est connu d'établir une liaison sécurisée entre deux points à travers un réseau public en utilisant un protocole d'échange de clés pour la création d'une liaison sécurisée. Un tel protocole est décrit dans la norme SSL qui est basé sur l'échange de données grâce à une paire de clés, soit la clé publique et la clé privée pour la définition d'une clé de session symétrique d'encryption. Les données sont encryptées par cette clé de session, cette dernière étant utilisée uniquement pour cette transaction.

Cette fonctionnalité ne peut se développer qu'entre deux interlocuteurs et ne peut donc permettre la formation d'un réseau de plusieurs utilisateurs. En effet, il faut autant d'unités de dialogue que d'ordinateurs à connecter.

Le besoin de créer de tels réseaux est présent dès lors que l'on souhaite relier plusieurs points distants mais connectés à un même réseau public tel qu'Internet.

Ce besoin va de pair avec une protection efficace des données échangées car dès que l'on se connecte sur Internet, aucune confidentialité n'est garantie.

Ainsi, il reste un problème non résolu qui consiste à relier plusieurs ordinateurs ou unités multimédias à travers un réseau public tout en garantissant la confidentialité de ces données.

Ce but est atteint par une méthode de création et d'exploitation d'un réseau privé virtuel (VPN) comprenant une pluralité d'unités connectées à un réseau public, chaque unité comprenant des moyens de sécurité disposant d'un numéro unique UA1, cette méthode étant caractérisée par les étapes suivantes:
- générer par les moyens de sécurité d'une unité U1, un droit D1 associé au numéro unique UA1,
- transférer, aux moyens de sécurité d'une unité U2, ce droit D1 encrypté par la clé publique de l'unité U2 et stocker ce droit D1 décrypté par la clé privée de cette unité U2 dans les moyens de sécurité de cette unité U2,
- encrypter les données envoyées par l'unité U1 et la description du droit D1 par une première clé K1 commune aux moyens de sécurité des unités U1 et U2,
- recevoir par la seconde unité U2 les données encryptées, présenter ces données aux moyens de sécurité de l'unité U2, décrypter la description du droit D1 et vérifier si la description du droit D1 correspond au droit D1 stocké et dans l'affirmative, décrypter les données par la clé d'encryption K1.

Lorsque l'unité U2 souhaite communiquer avec l'unité U1, elle exécute la même opération en utilisant le droit D1 comme identifiant et l'unité U1 pourra recevoir les données puisqu'elle contient ce droit.

Lorsque l'unité U1 envoie son droit D1 à une troisième unité U3, le même principe s'applique entre l'unité U1 et U3 mais également entre l'unité U2 et l'unité U3. Elles vont utiliser le droit D1 initié par l'unité U1 pour autoriser la décryption des données.

On constate ainsi qu'un réseau spontané a été créé dont le gestionnaire est l'unité U1, celle qui a créé le premier droit.

On peut diviser les unités en deux catégories, soit les unités génératrices tel que l'unité U1 et les unités participantes tels de U2 et U3.

Il est à noter que si l'unité U2 souhaite communiquer avec l'unité U1 sans que l'unité U3 puisse décrypter les données, l'unité U2 devient également une unité génératrice et envoie un droit D2 à l'unité U1. Un second réseau virtuel a été créé entre les unités U1 et U2.

Pratiquement, ces moyens de sécurité peuvent se présenter sous plusieurs formes. Pour assurer une haute sécurité au mécanisme d'encryption/décryption, il est utilisé des microprocesseurs spécialisés qui contiennent le moteur d'encryption et des données telles que les clés de sécurité.

Ces microprocesseurs sont fournis sous la forme d'une carte à puce au format Plug-in SIM ou ISO 7816-2.

Selon une première variante de l'invention, la carte réseau des unités contient une telle carte à puce, par exemple d'une manière équivalente à un téléphone GSM. Les données sont ainsi traitées directement sur la carte réseau et le fonctionnement se fait d'une manière transparente.

L'utilisateur de l'unité U2, lors de l'émission des données, n'aura qu'à sélectionner le réseau par lequel l'encryption doit être faite. En effet, il se peut que l'unité U2 soit membre de plusieurs réseaux (par exemple U1 et U3) et une sélection est donc à effectuer.

L'envoi du droit D1 à une autre unité est une opération qui requiert une grande attention. En effet, il faut être sûr que ce droit n'est chargé que dans les unités souhaitées par U1. Pour cela il existe une solution dans laquelle l'unité U1 accède à la clé publique de l'unité U2 pour encrypter le droit D1 et l'envoyer à l'unité U2. Ce droit ne peut alors être décrypté que par U2 grâce à sa clé privée. Les autres unités, ne possédant par la clé privée de l'unité U2, ne pourront pas décrypter le droit D1.

Afin d'empêcher que le droit D1 puisse être chargé dans d'autres unités que U2, il est possible de générer le droit D1 et de l'associer au numéro unique de U2 (c'est-à-dire UA2). L'information D1, UA2 est envoyée vers U2 et si d'autres moyens de sécurité (Un) tentent de charger ce droit (même avec le mot de passe par exemple), une vérification est faite afin de contrôler si le numéro unique UAn correspond avec celui associé avec le droit D1.

Les clés utilisées lors des différentes transactions jouent un rôle important. Pour la clé d'encryption de ces données, plusieurs variantes peuvent être utilisées.

Selon une première variante, les moyens de sécurité comprennent une clé secrète qui est commune à tous les moyens de sécurité. Cette clé peut être de type asymétrique (RSA) ou symétrique (DES, CAST, IDEA).

Selon une seconde variante, les moyens de sécurité de l'unité U1 génèrent une clé d'encryption/décryption K1, l'encryptent par la clé de service K0 et l'envoient avec le droit D1 selon les modalités détaillées plus haut. Ainsi, il y aura autant de clés différentes que de réseau virtuel. Une unité participant à trois réseaux va donc stocker trois clés différentes d'encryption.

Dans une forme plus élaborée de l'invention, il est possible que l'unité U1 souhaite communiquer des informations avec U3 sans que U2, également membre de son réseau, puisse lire ces informations. C'est pourquoi lorsque U1 génère le droit D1, il est ajouté un indice de réseau. Cet indice peut tenir sur quelques bits si l'on souhaite limiter le nombre de réseaux créé par U1 à 256 par exemple. Du côté de l'unité U2, si elle participe à plusieurs réseaux initiés par U1, elle ne dupliquera pas le droit D1 mais simplement l'indice du réseau.

Après la phase de transmission de ce droit à l'unité U2, les moyens de sécurité vont procéder à la vérification du droit et de l'indice. Il est ici rappelé que ces données sont stockées dans un crypto-processeur et ne peuvent être modifiées par l'utilisateur.

De cette manière, il sera beaucoup plus facile à l'unité U1 de gérer les différents réseaux créés.

L'invention sera mieux comprise grâce à la description détaillée qui va suivre et qui se réfère aux dessins annexés qui sont donnés à titre d'exemple nullement limitatif, à savoir:
- la figure 1 décrit un réseau à un seul niveau
- la figure 2 décrit un réseau à plusieurs niveaux.

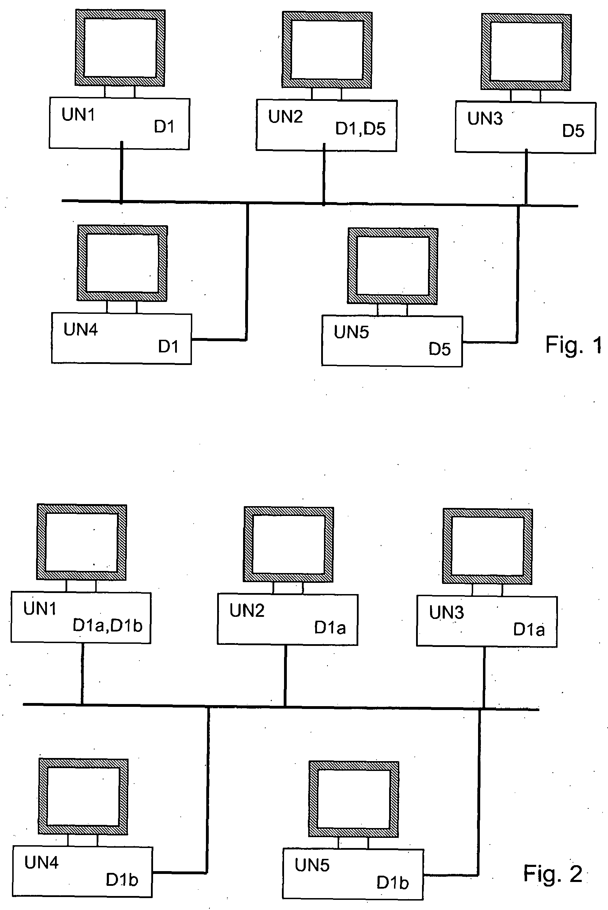

La figure 1 illustre 5 unités identifiées UN1 à UN5. Chaque unité contient des moyens de sécurité dans lesquels se trouve un crypto-processeur en charge de la génération des droits.

Selon notre exemple, l'unité UN1 génère le droit D1 qu'elle envoie aux unités UN2 et UN4.

Parallèlement, l'unité UN5 génère un droit D5 qu'elle envoie aux unités UN2 et UN3.

Nous avons un premier réseau formé des unités UN1, UN2 et UN4 ainsi qu'un second réseau formé par les unités UN2, UN3 et UN5. L'unité UN2 devra sélectionner le réseau sur lequel elle désire travailler puisqu'elle dispose des deux droits.

Lorsque des données sont échangées entre ces différentes unités, la clé secrète contenue dans les moyens de sécurité (ou celle générée avec le droit) est utilisée pour encrypter tous les contenus transférés entre les différentes unités.

La figure 2 illustre une variante dans laquelle l'unité UN1 a généré deux droits pour créer deux réseaux, D1 a et D1 b. Un premier réseau est créé entre les unités UN1, UN2 et UN3 alors qu'un deuxième réseau est créé ente les unités UN1, UN4 et UN5.

Cette variante permet une grande souplesse dans la diffusion d'informations confidentielles en choisissant qui pourra décrypter les informations. En effet, du fait que le réseau de transmission est public, on considère que les informations sont accessibles à toutes les unités disposant du droit quand bien même la liaison se fait d'une unité vers l'autre.

Selon un mode de réalisation de l'invention, les unités UN sont des décodeurs de télévision à péage et les moyens de sécurité sont constitués par la carte à puce. Ces décodeurs servent également à recevoir et envoyer des données pour les messages électroniques par exemple. Il est également possible de connecter un tel décodeur à un ordinateur pour bénéficier de l'interface avec un réseau haute-vitesse d'une part et de la sécurité des transactions d'autre part.

Selon un mode de réalisation particulier, le droit D comporte un champ de validité. Ainsi, chaque unité recevant ce droit dispose d'une période de validité. A chaque échange de données, la date courante est ajoutée.

Les moyens de sécurité vérifient la conformité de la validité du droit D avec la date courante ajoutée. Si cette date est hors de la validité, la décryption des données n'est pas effectuée. Il est prévu de renouveler la validité avant son échéance dans le cas bien sûr que le gestionnaire du droit le souhaite pour l'unité considérée. Ce renouvellement est effectué par l'envoi d'un message de contrôle aux unités concernées avec la description du droit et la nouvelle validité. Une fois que la validité est dépassée, le droit ne peut plus être étendu et une nouvelle procédure de transmission du droit, telle que décrite plus haut, est nécessaire.

## Revendications

1. Méthode de création et d'exploitation d'un réseau privé virtuel (VPN) comprenant une pluralité d'unités connectées à un réseau public, chaque unité comprenant des moyens de sécurité disposant au moins d'un numéro unique UA, cette méthode étant **caractérisée par** les étapes suivantes:
- générer par les moyens de sécurité d'une unité Un, un droit Dn associé au numéro unique UAn,
- transférer ce droit Dn encrypté par une clé publique d'une unité Um et stocker ce droit Dn décrypté par une clé privée de ladite unité Um dans les moyens de sécurité de ladite unité Um,
- encrypter par l'unité Un les données à envoyer et la description du droit Dn par une clé d'encryption de données KS, cette clé d'encryption KS étant une clé Kn commune aux moyens de sécurité des unités Un et Um,
- recevoir par la seconde unité Um les données encryptées, présenter ces données aux moyens de sécurité de l'unité Um, décrypter la description du droit Dn et vérifier si la description du droit Dn correspond au droit Dn stocké et dans l'affirmative, décrypter les données par la clé d'encryption de données KS.

2. Méthode selon la revendication 1, **caractérisée en ce que** le droit Dn est associé à un identificateur de la seconde unité Um, et que les moyens de sécurité de la seconde unité vérifie si le droit Dn leur est destiné.

3. Méthode selon les revendications 1 ou 2, **caractérisée en ce que** l'unité Un associe un indice de réseau Ra au droit Dn, et que l'appartenance d'une autre unité se fait sur les critères du droit Dn et de l'indice de réseau Ra.

4. Méthode selon la revendication 1, **caractérisée en ce que** la première clé Kn est générée avec le droit Dn et transmise aux unités participantes par l'intermédiaire d'une clé de service secrète K0 commune aux moyens de sécurité.

5. Méthode selon les revendications 1 à 4, **caractérisée en ce que** le droit Dn comprend un champ de validité, et comprend les étapes suivantes:
- joindre à la description du droit Dn, une indication de la date courante sous forme encryptée par l'unité Un ,
- recevoir cette indication par l'unité Um et vérifier par les moyens de sécurité de l'unité Um si cette date est comprise dans la durée de validité du droit Dn.

## Patentansprüche

1. Methode zur Schaffung und Ausnutzung eines virtuellen privaten Netzes (VPN) mit einer Vielzahl von Einheiten, die mit einem öffentlichen Netz verbunden sind, wobei jede Einheit Sicherheitsmittel aufweist, die mindestens über eine eindeutige Zahl UA verfügen, wobei dieses Verfahren durch die folgenden Schritte gekennzeichnet ist:
- die Sicherheitsmittel erzeugen eine Einheit Un, ein Recht Dn, das mit der eindeutigen Zahl UAn assoziiert ist,
- übertragen dieses Rechts Dn in die Sicherheitsmittel unter Verwendung eines öffentlichen Schlüssel mit einer Einheit Um und speichern, dieses Recht Dn mit einem privaten Schlüssel der Einheit Um in den Sicherheitsmitteln der Einheit Um entschlüsseln,
- Verschlüsselung, durch die Einheit Un, der zu sendenden Daten und der Beschreibung des Rechts Dn unter Verwendung eines Datenchiffrierschlüssel KS, dieser Chiffrierschlüssel KS ist ein Schlüssel Kn, den die Sicherheitsmittel der Einheiten Un und Um gemein haben,
- von der zweiten Einheit Um werden die verschlüsselten Daten empfangen, diese Daten werden den Sicherheitsmitteln der Einheit Um vorgezeigt, die Beschreibung des Rechtes Dn wird entschlüsselt und es wird nachgeprüft, ob die Beschreibung des Rechts Dn dem gespeicherten Recht Dn entspricht und falls ja, werden die Daten durch den Datenchiffrierschlüssel KS entschlüsselt.

2. Methode nach Anspruch 1, **gekennzeichnet dadurch, dass** das Recht Dn mit einem Identifikator der zweiten Einheit Um verbunden ist, und dass die Sicherheitsmittel der zweiten Einheit prüfen, ob das Recht Dn für sie bestimmt ist.

3. Methode nach den Ansprüchen 1 oder 2, **gekennzeichnet dadurch, dass** die Einheit Un einen Netzindex Ra mit dem Recht Dn assoziiert, und dass die Zugehörigkeit einer anderer Einheit nach den Kriterien des Rechts Dn und des Netzindexes Ra erfolgt.

4. Methode nach Anspruch 1, **gekennzeichnet dadurch, dass** der erste Schlüssel Kn mit dem Recht Dn erzeugt und an die teilnehmenden Einheiten mittels eines geheimen Dienstschlüssels K0 übertragen wird, der den Sicherheitsmitteln gemeinsam ist.

5. Methode nach den Ansprüchen 1 bis 4, **gekennzeichnet dadurch, dass** das Recht Dn ein Gültigkeitsfeld und die folgenden Schritte umfasst:
- der Beschreibung des Rechts Dn eine Angabe des laufenden Datums in von der Einheit Un verschlüsselter Form beifügen,
- Empfangen dieser Angabe durch die Einheit Um und Prüfung durch die Sicherheitsmittel der Einheit Um, ob dieses Datum innerhalb der Gültigkeitsdauer des Rechts Dn liegt.

## Claims

1. Method to create and use a virtual private network (VPN) comprising a plurality of units connected to a public network, each unit having security means which have at least a unique number UA, this method being **characterized by** the following steps:
- generating a right Dn associated to the unique number UAn, by the security means of a unit Un,
- transferring this right Dn encrypted using a public key of a unit Um and storing this right Dn decrypted using a private key of said unit Um in the security means of said unit Um,
- encrypting by the unit Un the data to be sent and the description of the right Dn using a data encryption key KS, this encryption key KS being a key Kn common to the security means of units Un and Um,
- receiving by the second unit Um the encrypted data, presenting these data to the security means of the unit Um, decrypting the description of the right Dn and verifying if the description of the right Dn corresponds to the stored right Dn and in the positive event, decrypting the data using the data encryption key KS.

2. Method according to claim 1, **characterized by** the fact that the right Dn is associated with an identifier of the second unit Um, and that the security means of the second unit verifies if the right Dn is destined for them.

3. Method according to claims 1 or 2, **characterized by** the fact that a network index Ra is associated with the right Dn by the unit Un, and that affiliation of another unit is done on the criteria of the right Dn and on the network index Ra.

4. Method according to claim 1, **characterized by** the fact that the first key Kn is generated with the right Dn and transmitted to the participating units by means of a secret service key K0 common to the security means.

5. Method according to claims 1 to 4, **characterized by** the fact that the right Dn has a validity field, and includes the following steps:
- adding to the description of the right Dn, an indication of the current date in encrypted form by the unit Un,
- receiving this indication by the unit Um and verifying by the security means of the unit Um if this date is within the validity range of the right Dn.
